# EUROPÄISCHE PATENTANMELDUNG

(11) **EP 4 079 423 A1**
(43) Veröffentlichungstag der Anmeldung: **26.10.2022**
(21) Anmeldenummer: 22162874.6
(22) Anmeldetag: 18.03.2022
(51) Int. Cl.: B21D 39/03, F16C 29/10, F16L 3/18

(54) **VERFAHREN ZUM HERSTELLEN EINER ROHRFÖRMIGEN FÜHRUNGSSCHIENE MIT EINEM SCHIEBEGLEITER UND FÜHRUNGSSCHIENE MIT EINEM SCHIEBEGLEITER**

(30) Priorität: 20.04.2021 DE 102021109869
(71) Anmelder: fischerwerke GmbH & Co. KG, 72178 Waldachtal (DE)
(72) Erfinder: Kosanke, Timo, 72250 Freudenstadt-Dietersweiler (DE); Wälder, Jonas, 71069 Sindelfingen (DE)
(74) Vertreter: Suchy, Ulrich Johannes

(57) **Zusammenfassung**

Zu einer Herstellung einer rohrförmigen Führungsschiene (3) mit einem Schiebegleiter (8) schlägt die Erfindung vor, zwei flächenförmige Bauteile (1, 2), von denen eines eine rechteckige Erhebung (4) aufweist, in die der Schiebegleiter (8) eingelegt wird, durch Kragenziehen in Verbindungsbereichen (7) außerhalb der Erhebung (4) miteinander zu verbinden.

## Beschreibung

Die Erfindung betrifft ein Verfahren zum Herstellen einer rohrförmigen Führungsschiene mit einem Schiebegleiter mit den Merkmalen des Oberbegriffs des Anspruchs 1 und die Führungsschiene mit dem Schiebegleiter mit den Merkmalen des Oberbegriffs des Anspruchs 7.

Das Gebrauchsmuster DE 84 06 915 U1 offenbart eine Führungsschiene mit einem in ihr in ihrer Längsrichtung verschiebbar geführten Schiebegleiter. Die Führungsschiene weist die Form eines offenen Rechteckrohrprofils mit einem breiten, in der Längsrichtung durchgehenden Längsschlitz in einer Mitte einer Seite der Führungsschiene auf. Der Schiebegleiter weist die Form eines an beiden Seiten rechtwinklig nach Art eines Z-Profils gekröpften Blechs auf, wobei auf die Kröpfung Gleitschuhe aus Kunststoff gesteckt sind, die seitlich des Längsschlitzes in der Führungsschiene aufgenommen sind, so dass der Schiebegleiter in der Längsrichtung der Führungsschiene verschiebbar geführt ist.

Aufgabe der Erfindung ist, ein Verfahren zur Herstellung einer zweiteiligen, rohrförmigen Führungsschiene vorzuschlagen, in der ein Schiebegleiter verschiebbar geführt ist. "Zweiteilig" bedeutet, dass die Führungsschiene aus mindestens zwei Bauteilen zusammengesetzt ist. Mehr als zwei Bauteile sind nicht ausgeschlossen. Weitere Aufgabe der Erfindung ist die Führungsschiene mit dem Schiebegleiter.

Diese Aufgabe wird erfindungsgemäß durch die Merkmale der Ansprüche 1 und 7 gelöst. Die erfindungsgemäße Führungsschiene ist rohrförmig und weist einen in ihrer Längsrichtung verschiebbaren Schiebegleiter auf. Insbesondere weist die Führungsschiene einen rechteckigen oder quadratischen Querschnitt und sie weist ein in ihrer Längsrichtung verlaufendes Langloch auf, das auch ein durchgehender Längsschlitz sein kann.

Die Führungsschiene ist aus mindestens zwei flächenförmigen Bauteilen zusammengesetzt, die erfindungsgemäß so aneinander angeordnet werden, dass sie die rohrförmige Führungsschiene bilden und in einem Verbindungsbereich aneinander anliegen. "Flächenförmig" bedeutet ein zweidimensionales Bauteil wie beispielsweise ein Blech, das dünn im Verhältnis zu seiner zweidimensionalen Erstreckung senkrecht zu seiner Dicke ist. Insbesondere sind die zwei flächenförmigen Bauteile aus Blech gefertigt. Insbesondere beträgt die Dicke nur einen Bruchteil einer Länge und Breite des Bauteils. Der Verbindungsbereich ist ein nicht unbedingt abgegrenzter oder abgrenzbarer Bereich, in dem die beiden Bauteile zum Zwecke ihrer Verbindung miteinander zu der Führungsschiene verbunden werden beziehungsweise sind. Die Führungsschiene beziehungsweise ihre beiden Bauteile können mehrere Verbindungsbereiche aufweisen. Insbesondere befindet sich der oder befinden sich die Verbindungsbereiche seitlich neben dem Rohrprofil, an oder in dem der Schiebegleiter verschiebbar geführt ist. Insbesondere sind die Verbindungsbereiche identisch ausgebildet.

Während des Anordnens der beiden Bauteile aneinander wird der Schiebegleiter zwischen den beiden Bauteilen in dem Bereich angeordnet, der das Rohrprofil bildet, das den Schiebegleiter in der Längsrichtung verschiebbar führt. Oder der Schiebegleiter wird nach dem Anordnen der beiden Bauteile aneinander - beispielsweise durch ein offenes Ende - in die Führungsschiene eingebracht.

Verbunden werden die beiden Bauteile miteinander durch Kragenziehen, das heißt, in dem durch Umformen ein axial kurzer, rohrförmiger Kragen im Verbindungsbereich eines ersten der beiden Bauteile hergestellt wird, der in ein Loch im Verbindungsbereich eines zweiten der beiden Bauteile hinein geformt wird. Der Vorgang ist vergleichbar oder ähnlich einem Nieten. Um den Kragen formen zu können, ist das erste Bauteil zumindest in dem Verbindungsbereich plastisch verformbar. Zum Verbinden des ersten flächigen Bauteils mit dem zweiten flächigen Bauteil werden die beiden Bauteile in einem ersten Schritt flächig aneinandergelegt, insbesondere aneinandergepresst. Das erste Bauteil weist insbesondere ein Loch auf, welches im Durchmesser um ein Mehrfaches kleiner ist als das Loch im zweiten Bauteil. Die Bauteile werden so aneinander angeordnet, respektive aneinandergepresst bzw. zueinander verspannt, dass die Löcher insbesondere koaxial zueinander angeordnet sind. In einem nächsten Schritt wird ein Stempel durch das kleinere Loch im ersten Bauteil und durch das Loch im zweiten Bauteil hindurchgestoßen. Dadurch wird das Material des ersten Bauteils plastisch in das Loch des zweiten Bauteils hineingezogen, respektive hineingepresst. Dadurch wird der, insbesondere kreisrunde, Kragen aus dem Material des ersten Bauteils gebildet, durch welchen die beiden Bauteile verliersicher aneinandergehalten sind. Die Verbindung ist insbesondere kraft- und/oder formschlüssig.

Die erfindungsgemäße Verbindung ist schnell und einfach herstellbar, benötigt keine Zusatzteile oder Zusatzwerkstoffe und ist kalt ausführbar, so dass zumindest eines der beiden Bauteile und insbesondere der Schiebegleiter aus einem nicht wärmebeständigen Werkstoff bestehen kann, beispielsweise aus einem Kunststoff mit einer Schmelztemperatur, die kein Schweißen erlaubt.

Die Führungsschiene kann mehrere solche durch Kragenziehen hergestellte Verbindungen in einem Verbindungsbereich aufweisen. Beispielsweise kann die Führungsschiene einen Verbindungsbereich aufweisen, der sich in ihrer Längsrichtung erstreckt und in dem in Abständen in der Längsrichtung hintereinander durch Kragenziehen Verbindungen hergestellt sind. Die Führungsschiene kann auch mehrere Verbindungsbereiche in der Längsrichtung der Führungsschiene hintereinander aufweisen. Möglich sind auch zwei Verbindungsbereiche auf einander abgewandten Seiten des Rohrprofils der Führungsschiene, also auf zwei einander abgewandten Seiten des Schiebegleiters. Insbesondere weist hierbei jeder Verbindungsbereich eine Verbindung auf, wobei die Verbindungen bezüglich dem Rohrprofil identische Abstände aufweisen. Hierdurch ist eine optimale Befestigung der beiden Bauteile aneinander gewährleistet.

Vorzugsweise bildet der Kragen des ersten Bauteils der Führungsschiene eine Presspassung mit dem Loch in dem zweiten Bauteil der Führungsschiene aus. Dadurch werden die beiden Bauteile durch ein Klemmen des Kragens des ersten Bauteils in dem Loch in dem zweiten Bauteil aneinandergehalten. Der Kragen kann bündig mit dem Verbindungsbereich des zweiten Bauteils abschließen oder er kann aus dem Loch im Verbindungsbereich des zweiten Bauteils vorstehen. Möglich ist auch, dass der Kragen des ersten Bauteils auf einer dem ersten Bauteil abgewandten Seite des zweiten Bauteils vergleichbar einem Niet aufgeweitet, das heißt stellenweise oder auf einem gesamten Umfang des Kragens radial nach außen umgeformt wird, so dass der Kragen das zweite Bauteil übergreift und auf diese Weise durch Formschluss mit dem ersten Bauteil verbindet. In diesem Fall ist eine Presspassung des Kragens im Loch nicht zwingend, allerdings möglich. Diese Art der Verbindung ist bevorzugt und gewährleistet eine äußerst stabile Befestigung der beiden Bauteile aneinander.

Eine Ausgestaltung der Erfindung sieht ein Befestigungsgewinde am Schiebegleiter vor, das von dem Langloch der Führungsschiene überdeckt wird derart, dass das Befestigungsgewinde zu einer Schraubbefestigung zugänglich ist. Das Befestigungsgewinde kann ein Innengewinde sein, in das eine Schraube, ein Gewindebolzen oder dergleichen geschraubt werden kann. Das Befestigungsgewinde kann auch ein Außengewinde beispielsweise an einem Gewindeschaft des Schiebegleiters sein, der durch das Langloch aus der Führungsschiene heraus steht.

Eine Ausgestaltung der Erfindung sieht vor, dass der Kragen ein Befestigungsloch zu einer Befestigung der Führungsschiene an einem Untergrund bildet. Die Führungsschiene wird beispielsweise mit einer Schraube oder allgemein einem Befestigungselement, die/das durch den Kragen geführt ist, mit einem Untergrund verschraubt, an dem Untergrund angeschraubt oder allgemein an dem Untergrund befestigt. Beispielsweise ist eine Befestigung der Führungsschiene an einer Montageschiene möglich, wo der Schiebegleiter je nach Ausrichtung der Führungsschiene zur Montageschiene eine Relativbewegung in einer Längs- oder einer Querrichtung der Montageschiene ausgleicht. Insbesondere wird in jeden Kragen, also in jede hergestellte Verbindung zwischen dem ersten und dem zweiten Bauteil ein Befestigungselement eingebracht um den Schiebegleiter stabil am Untergrund zu befestigen. Dadurch, dass in einer bevorzugten Ausgestaltung, die Verbindungen bezüglich dem Rohrprofil identische Abstände aufweisen, ist auch eine gleichmäßige Befestigung des Schiebegleiters am Untergrund gewährleistet. Anders formuliert ist durch die Anordnung der Verbindungen "links" und "rechts" des Rohrprofils in gleichen Abständen zum Rohrprofil eine stabile und gleichmäßige Befestigung des Schiebegleiters am Untergrund möglich.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des oder der

Ausführungsbeispiele, sondern einen grundsätzlich beliebigen Teil der gekennzeichneten Merkmale eines Ausführungsbeispiels aufweisen, sind möglich.

Die Erfindung wird nachfolgend anhand eines in der Zeichnung dargestellten Ausführungsbeispiels näher erläutert. Es zeigen:
- Figur 1: eine perspektivische Darstellung eines erfindungsgemäßen Verfahrens zur Herstellung einer erfindungsgemäßen Führungsschiene mit einem Schiebegleiter;
- Figur 2: eine vergrößerte Querschnittdarstellung in einem Verbindungsbereich der erfindungsgemäßen Führungsschiene während der erfindungsgemäßen Herstellung;
- Figur 3: die Schnittdarstellung aus Figur 2 in einem späteren Verfahrensstand;
- Figur 4: eine Vergrößerung einer Einzelheit gemäß Kreis IV in Figur 3;
- Figur 5: eine Querschnittdarstellung einer Aufweitung eines Kragens im Verbindungsbereich der Führungsschiene aus Figuren 1 bis 4 während der erfindungsgemäßen Herstellung;
- Figur 6: den Querschnitt aus Figur 5 in einem späteren Verfahrensstand; und
- Figur 7: eine perspektivische Darstellung der erfindungsgemäßen Führungsschiene auf einem Untergrund/montiert an einer Montageschiene.

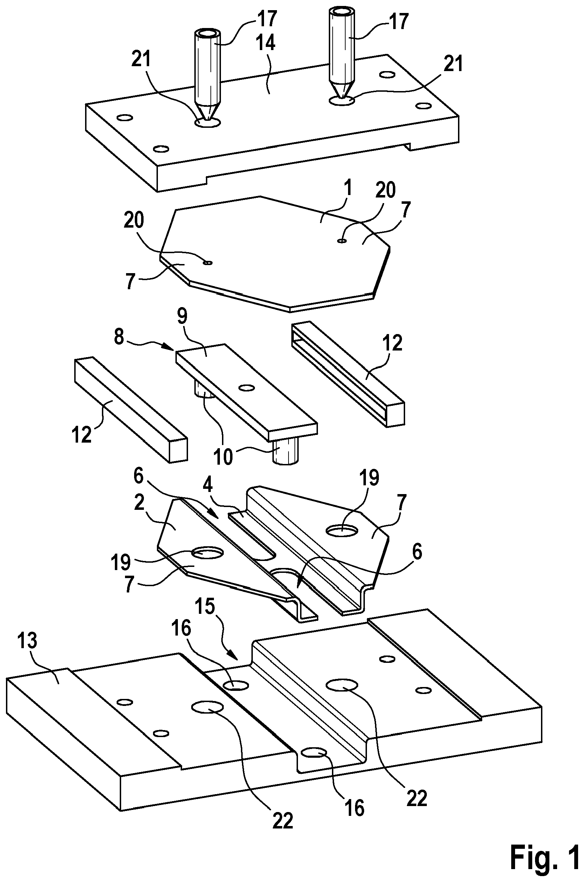

Figur 1 zeigt zwei Bauteile 1, 2 einer erfindungsgemäßen Führungsschiene 3 und eine mehrteilige Vorrichtung zu einer erfindungsgemäßen Herstellung der Führungsschiene 3.

Die Führungsschiene 3 weist ein erstes, plastisch verformbares, flächenförmiges Bauteil 1 auf, das im Ausführungsbeispiel eine ebene Platte, nämlich ein Blech ist. Im Ausführungsbeispiel ist das erste Bauteil 1 in Ansicht achteckig, was allerdings nicht zwingend für die Erfindung ist.

Außerdem weist die Führungsschiene 3 ein zweites, flächenförmiges Bauteil 2 auf, das in Ansicht deckungsgleich mit dem ersten Bauteil 1 ist, was allerdings ebenfalls nicht zwingend für die Erfindung ist. In einer Mitte weist das zweite Bauteil 2 eine rechteckige, kanalartige Erhebung 4 mit gleichbleibendem Querschnitt über die gesamte Länge der Erhebung 4 auf. Die Erhebung 4 bildet zusammen mit dem ersten Bauteil 1, wenn die beiden Bauteile 1, 2 deckungsgleich aneinander anliegen, ein Rohr 5 mit rechteckigem Querschnitt, welches ein Teil der Führungsschiene 3 ist Es kann auch davon gesprochen werden, dass durch das Rohr 5, welches durch das Aneinanderfügen des ersten und des zweiten Bauteils 1, 2 entsteht, die "eigentliche" Führungsschiene 3 gebildet wird.

Die das Rohr 5 bildende Erhebung 4 des zweiten Bauteils 2 der Führungsschiene 3 weist zwei Langlöcher 6 in einer Quermitte der Erhebung 4 auf, die in einer Längsrichtung der Erhebung 4 und damit in der Längsrichtung der Führungsschiene 3 verlaufen. Die Langlöcher 6 sind an beiden Enden der Erhebung 4 beziehungsweise der Führungsschiene 3 offen und enden kurz vor einer Mitte der Erhebung 4 beziehungsweise der Führungsschiene 3.

Beide Bauteile 1, 2 der Führungsschiene 3 stehen in einer Ebene beiderseits seitlich von der Erhebung 4 ab, die zusammen mit dem ersten Bauteil 1 das Rohr 5 mit dem rechteckigen Querschnitt beziehungsweise die "eigentliche" Führungsschiene 3 bildet. Die seitlich abstehenden, im Ausführungsbeispiel in Ansicht trapezförmigen Bereiche der beiden Bauteile 1, 2 bilden Verbindungsbereiche 7, in denen die beiden Bauteile 1, 2 aneinander anliegen und erfindungsgemäß durch Kragenziehen miteinander zu der Führungsschiene 3 verbunden werden.

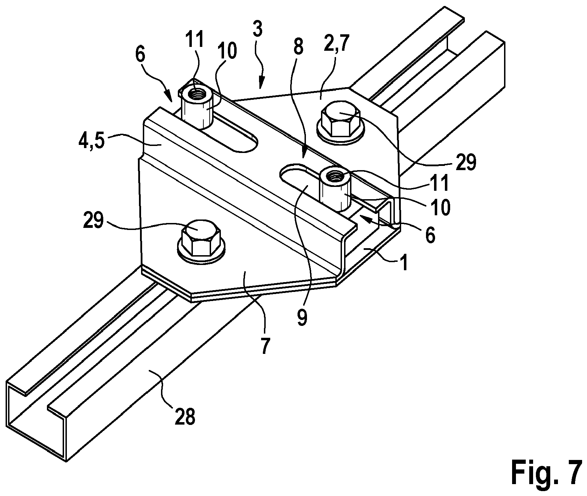

Zwischen den beiden Bauteilen 1, 2 ist ein Schiebegleiter 8 angeordnet, der im Ausführungsbeispiel ein streifenförmiges Fußteil 9 aufweist, von dem zwei Hülsen 10 mit Innengewinden als Befestigungsgewinden 11 (Figur 7) abstehen. Die Hülsen 10 sind nahe den Enden des Fußteils 9 angeordnet und stehen zur gleichen Seite vom Fußteil 9 ab. Das Fußteil 9 ist dem ersten Bauteil 1 zugewandt und die Hülsen 10 mit den Befestigungsgewinden 11 stehen bei fertiggestellter Führungsschiene 1 aus den Langlöchern 6 vor.

Auf Längsseitenränder des Fußteils 9 des Schiebegleiters 8 sind beziehungsweise werden Gleitschuhe 12 aus Kunststoff gesteckt.

Die in der Figur 1 dargestellte Vorrichtung zum Herstellen der Führungsschiene 3 beziehungsweise zum Verbinden der beiden Bauteile 1, 2 der Führungsschiene 3 weist ein erstes Teil, das hier als Unterteil 13, und ein zweites Teil, das hier als Oberteil 14 bezeichnet wird, auf. Das Unterteil 13 weist eine Nut 15 mit rechteckigem Querschnitt auf, deren Querschnitt dem Querschnitt der Erhebung 4 des zweiten Bauteils 2 der Führungsschiene 3 entspricht.

Es wird das erste Bauteil 1 der Führungsschiene 3 so auf das Unterteil 13 der Vorrichtung gelegt, dass sich die Erhebung 4 des ersten Bauteils 1 in der Nut 15 des Unterteils 13 befindet und die Verbindungsbereiche 7 des ersten Bauteils 1 seitlich der Nut 15 auf dem Unterteil 13 aufliegen.

Die beiden Gleitschuhe 12 werden auf das Fußteil 9 des Schiebegleiters 8 gesteckt und der Schiebegleiter 8 wird so in die Erhebung 4 gelegt, dass die Hülsen 10 des Schiebegleiters 8 durch die Langlöcher 6 in der Erhebung 4 des ersten Bauteils 1 ragen. Das Unterteil 13 der Vorrichtung zum Herstellen der Führungsschiene 3 weist Löcher 16 zur Aufnahme der Hülsen 10 am Grund seiner Nut 15 auf.

Anschließend wird das zweite Bauteil 2 der Führungsschiene 3 deckungsgleich auf das erste Bauteil 1 aufgelegt und das Oberteil 14 der Vorrichtung zur Herstellung der Führungsschiene 3 darauf angeordnet und mittels einer nicht dargestellten Spannvorrichtung mit dem Unterteil 13 zusammengespannt.

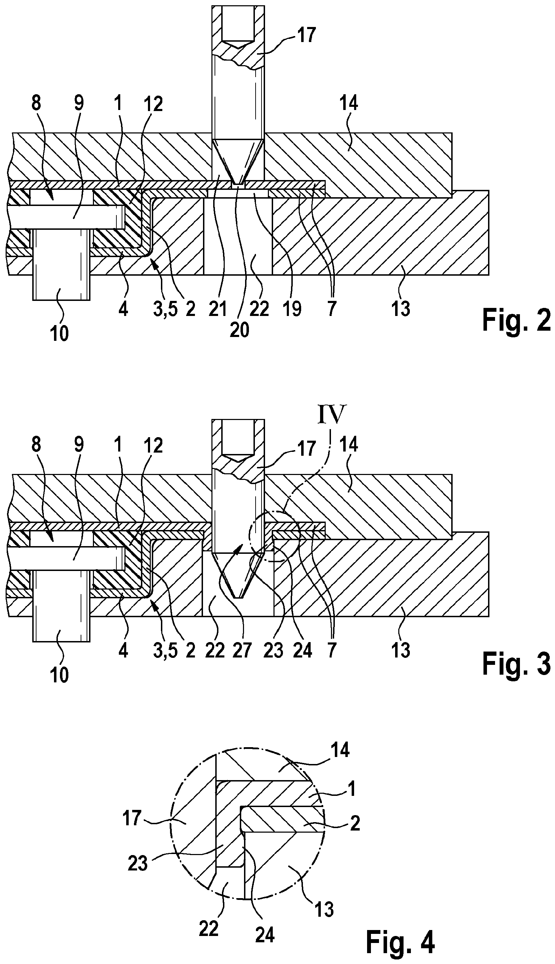

Sind das Oberteil 14 und das Unterteil 13 der Vorrichtung zusammengespannt und die beiden Bauteile 1, 2 der Führungsschiene 3 zwischen dem Oberteil 14 und dem Unterteil 13 festgespannt, wird zur Verbindung der beiden Bauteile 1, 2 mit Stempeln 17 in jedem Verbindungsbereich 7 ein Kragen 18 im Verbindungsbereich 7 des ersten Bauteils 1 durch ein Loch 19 im zweiten Bauteil 2 gezogen, wie es Figuren 2 und 3 zeigen. Dafür weist das erste Bauteil 1 ein kleineres, mit dem Loch 19 im zweiten Bauteil 2 fluchtendes Loch 20 auf. Der Stempel 17 weist eine Spitze auf und wird durch ein Loch 21 im Oberteil 14, das mit den Löchern 19, 20 in den Bauteilen 2, 1 fluchtet, durchgeführt bis in ein Loch 22 im Unterteil 13. Das Loch 21 im Oberteil 14 weist den gleichen Durchmesser wie der Stempel 17 und das Loch 22 im Unterteil 13 weist den gleichen Durchmesser wie das Loch 19 im zweiten Bauteil 2 auf.

Durch das Durchführen des Stempels 17 wird ein das kleine Loch 20 im ersten Bauteil 1 umgebender Bereich zu einem hülsenförmigen Kragen 23 umgeformt, der sich in beziehungsweise durch das Loch 19 im zweiten Bauteil 2 erstreckt (Figur 3). Zum Kragenziehen beziehungsweise Umformen ist das erste Bauteil 1 der Führungsschiene 3 zumindest in dem das Loch 20 umgebenden Bereich plastisch verformbar. Der Durchmesser des Lochs 19 im zweiten Bauteil 2 ist um weniger als ein doppeltes einer Dicke des ersten Bauteils 1 größer als der Durchmesser des Stempels 17, wodurch ein umlaufender, radial nach außen überstehende Wulst 24 an dem Kragen 23 entsteht, der das zweite Bauteil 2 auf einer dem ersten Bauteil 1 abgewandten Seite übergreift, wie es in der Vergrößerung der Figur 4 gezeigt ist. Die beiden Bauteile 1, 2 sind dadurch formschlüssig verbunden. Außerdem entsteht bei dem beschriebenen Kragenziehen eine Presspassung zwischen dem Kragen 23 des ersten Bauteils 1 und dem Loch 19 im zweiten Bauteil 2, so dass auch eine kraftschlüssige Verbindung der beiden Bauteile 1, 2 durch das Kragenziehen besteht.

Nach dem Kragenziehen wird der Stempel 17 herausgezogen, das Oberteil 14 vom Unterteil 13 abgehoben und die Führungsschiene 3 entnommen. Der Schiebegleiter 8 ist in dem Rohr 5, dass die beiden Bauteile 1, 2 bilden und das die Führungsschiene 3 bildet, in der Längsrichtung der Führungsschiene 3 verschiebbar aufgenommen.

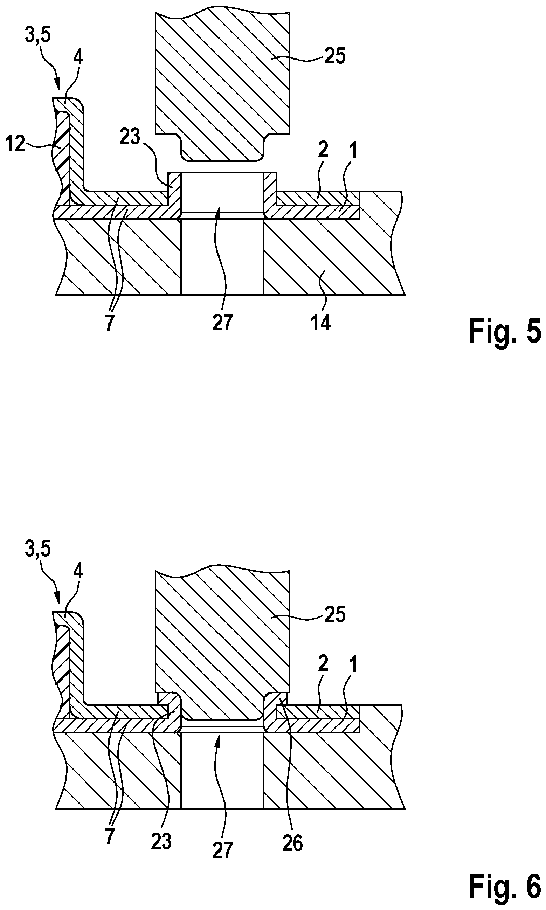

Zu einer Verbesserung der Verbindung können die Krägen 23 nach dem Kragenziehen mit einem Aufweitstempel 25 aufgeweitet werden, wie es Figuren 5 und 6 zeigen. Dabei wird der Kragen 23 auf der dem ersten Bauteil 1 abgewandten Seite des zweiten Bauteils 2 umlaufend zu einer Art Radialflansch 26 radial nach außen umgeformt.

Die Führungsschiene 3 kann an einem Untergrund 28 wie beispielsweise einer Wand, einer Säule oder einer Decke befestigt werden, wofür die Krägen 23 als Befestigungslöcher 27 verwendet werden, durch die beispielsweise Befestigungsschrauben 29 zu einem Anschrauben der Führungsschiene 3 an dem Untergrund 28 durchgeführt werden. Figur 7 zeigt die Führungsschiene 3 quer auf eine Montageschiene geschraubt, die als Untergrund 28 aufgefasst werden kann. Dazu sind die Befestigungsschrauben 29 durch die Krägen 23, die als Befestigungslöcher 27 verwendet werden, durchgeführt, und in in der Zeichnung nicht sichtbare Hammerkopfmuttern in die den Untergrund 28 bildende Montageschiene geschraubt.

### Bezugszeichenliste

### Verfahren zum Herstellen einer rohrförmigen Führungsschiene mit einem Schiebegleiter und Führungsschiene mit einem Schiebegleiter

- 1: erstes Bauteil
- 2: zweites Bauteil
- 3: Führungsschiene
- 4: Erhebung
- 5: Rohr
- 6: Langloch
- 7: Verbindungsbereich
- 8: Schiebegleiter
- 9: Fußteil
- 10: Hülse
- 11: Befestigungsgewinde
- 12: Gleitschuh
- 13: Unterteil
- 14: Oberteil
- 15: Nut
- 16: Loch
- 17: Stempel
- 18: *frei*
- 19: Loch im zweiten Bauteil 2
- 20: Loch im ersten Bauteil 1
- 21: Loch im Oberteil 14
- 22: Loch im Unterteil 13
- 23: Kragen
- 24: Wulst
- 25: Aufweitstempel
- 26: Radialflansch
- 27: Befestigungsloch
- 28: Untergrund
- 29: Befestigungsschraube

## Patentansprüche

1. Verfahren zum Herstellen einer rohrförmigen Führungsschiene (3) und einem Schiebegleiter (8), der in einer Längsrichtung der Führungsschiene (3) in der Führungsschiene (3) verschiebbar geführt ist, wobei die Führungsschiene (3) ein in ihrer Längsrichtung verlaufendes Langloch (6), ein erstes, plastisch verformbares, flächenförmiges Bauteil (1) und ein zweites, flächenförmiges Bauteil (2) aufweist, wobei die beiden Bauteile (1, 2) so aneinander angeordnet werden, dass sie die rohrförmige Führungsschiene (3) bilden und in einem Verbindungsbereich (7) aneinander anliegen und der Schiebegleiter (8) derart zwischen den beiden Bauteilen (1, 2) angeordnet wird, dass der Schiebegleiter (8) in der Längsrichtung der Führungsschiene (3) verschiebbar in der Führungsschiene (3) aufgenommen ist, und wobei die beiden Bauteile (1, 2) durch Kragenziehen eines Kragens (23) in dem Verbindungsbereich (7) an dem ersten flächenförmigen Bauteil (1) in ein Loch (19) in dem zweiten flächenförmigen Bauteil (2) miteinander verbunden werden.

2. Verfahren nach Anspruch 1, **dadurch gekennzeichnet, dass** die Führungsschiene (3) zwei Verbindungsbereiche (7) mit jeweils einem in ein Loch (19) in dem zweiten flächenförmigen Bauteil (2) gezogenen Kragen (23) des ersten flächenförmigen Bauteils (1) auf zwei einander abgewandten Seiten des Schiebegleiters (8) aufweist.

3. Verfahren nach Anspruch 1 oder 2, **dadurch gekennzeichnet, dass** der Kragen (23) eine Presspassung mit dem Loch (19) in dem zweiten flächenförmigen Bauteil (2) bildet.

4. Verfahren nach einem oder mehreren der Ansprüche 1 bis 3, **dadurch gekennzeichnet, dass** der Kragen (23) auf einer dem ersten flächenförmigen Bauteil (1) abgewandten Seite des zweiten flächenförmigen Bauteils (2) aufgeweitet wird.

5. Verfahren nach einem oder mehreren der vorhergehenden Ansprüche, **dadurch gekennzeichnet, dass** der Schiebegleiter (8) ein Befestigungsgewinde (11) aufweist, das von dem Langloch (6) überdeckt wird.

6. Verfahren nach einem oder mehreren der vorhergehenden Ansprüche, **dadurch gekennzeichnet, dass** der Kragen (23) ein Befestigungsloch (27) bildet, durch das die Führungsschiene (3) an einem Untergrund (28) befestigt wird.

7. Führungsschiene (3) mit einem Schiebegleiter (8), der in einer Längsrichtung der Führungsschiene (3) in der Führungsschiene (3) verschiebbar geführt ist, wobei die Führungsschiene (3) ein in ihrer Längsrichtung verlaufendes Langloch (6) und ein erstes, plastisch verformbares, flächenförmiges Bauteil (1) und ein zweites flächenförmiges Bauteil (2) aufweist, die so aneinander angeordnet sind, dass sie eine rohrförmige Führungsschiene (3) bilden und in einem Verbindungsbereich (7) aneinander anliegen und wobei der Schiebegleiter (8) derart zwischen den beiden Bauteilen (1, 2) angeordnet ist, dass er in der Längsrichtung der Führungsschiene (3) verschiebbar in der Führungsschiene (3) aufgenommen ist, und wobei die beiden Bauteile (1, 2) durch Kragenziehen eines Kragens (23) in dem Verbindungsbereich (7) des ersten flächenförmigen Bauteils (1) in ein Loch (19) in dem zweiten flächenförmigen Bauteil (2) miteinander verbunden sind.

8. Führungsschiene nach Anspruch 7, **dadurch gekennzeichnet, dass** die Führungsschiene (3) mittels eines durch den Kragen (23) geführten Befestigungselements (29) an einem Untergrund (28) befestigt ist.
